# EUROPÄISCHE PATENTSCHRIFT

(11) **EP 1 968 824 B1**
(45) Veröffentlichungstag und Bekanntmachung des Hinweises auf die Patenterteilung: **09.01.2013**
(21) Anmeldenummer: 06819515.5
(22) Anmeldetag: 15.11.2006
(51) Int. Cl.: B60S 1/34

(54) **SCHEIBENWISCHER**
WIPER
ESSUIE-GLACE

(30) Priorität: 28.12.2005 DE 102005062790
(43) Veröffentlichungstag der Anmeldung: 17.09.2008
(73) Patentinhaber: Robert Bosch GmbH, 70442 Stuttgart (DE)
(72) Erfinder: KRAUS, Achim, 77815 Buehl (DE); ESCHENBRENNER, Nicolas, F-67100 Strasbourg (FR)
(86) Internationale Anmeldenummer: PCT/EP2006/068510
(87) Internationale Veröffentlichungsnummer: WO 2007/080007

(56) Entgegenhaltungen:
- US-A- 2 856 212
- US-A- 3 161 902
- US-A- 3 429 597

## Beschreibung

### Stand der Technik

Die vorliegende Erfindung betrifft einen Scheibenwischer gemäß dem Oberbegriff des Patentanspruchs 1, insbesondere einen Scheibenwischer für ein Kraftfahrzeug, und ein entsprechendes Verfahren zu dessen Ausrichtung gemäß dem Oberbegriff des Patentanspruchs 5.

Aus dem Stand der Technik sind Scheibenwischer bekannt, die an Antriebswellen mit kegelstumpfförmigen Endabschnitten angebracht sind. Auf dem kegelstumpfförmigen Endabschnitt, der in eine Schraube übergeht, ist eine Rändelung ausgebildet. Die Rändelung des kegelstumpfförmigen Abschnitts greift in eine entsprechende Rändelung ein, die in einer Nabe an einem Ende eines Wischerarmes des Scheibenwischers ausgebildet ist. Die Rändelung verhindert eine Verdrehung des Scheibenwischers relativ zu der Antriebswelle. Die Schraube am Ende der Antriebswelle steht aus der Nabe hervor und greift in eine Mutter ein, so daß der Scheibenwischer an der Antriebswelle befestigt ist und sich aufgrund der ineinandergreifenden Rändelungen relativ zueinander nicht verdrehen kann.

Die Ausrichtung des Wischerarms zu der Antriebswelle bestimmt gleichzeitig die Ausrichtung des Scheibenwischers mit dem Wischerblatt relativ zur Windschutzscheibe. In der Fertigung ist eine weitgehende Standardisierung bestimmter Bestandteile von Scheibenwischern erwünscht, die dann für verschiedene Kraftfahrzeuge eingesetzt werden können. Für verschiedene Kraftfahrzeuge muß der Scheibenwischer dann unterschiedlich ausgerichtet werden.

Die Feinheit der Ausrichtung des Scheibenwischers hängt dabei von dem Abstand der Rillen der Rändelung ab. Ein gewisser Abstand der Rillen soll dabei nicht unterschritten werden, um die Belastbarkeit des Scheibenwischers zu gewährleisten. Die so erreichbare Feinausrichtung des Scheibenwischers hat sich in der Praxis allerdings als nicht ausreichend erwiesen.

Die EP 0 673 813 B 1 offenbart einen gattungsbildenden Scheibenwischer der eine ausreichende Feinausrichtung des Scheibenwischers ermöglicht. Der Scheibenwischer weist einen Scheibenwischerarm und ein Befestigungselement auf, wobei das Befestigungselement an dem Scheibenwischerarm befestigt ist, und wobei das Befestigungselement eine Nabe aufweist, die auf eine Antriebswelle aufsteckbar ist.

Die Feinausrichtung wird dabei durch übereinanderliegende Ausrichtungsscheiben erreicht. Aufgrund dieser Ausrichtungsscheiben ist der Scheibenwischer jedoch voluminös und schwer.

Die Patentschrift US 2,856,212 zeigt einen Wischerarm, welcher mittels einer Schraube an einer Antriebswelle befestigt ist. Hierbei ist die Schraube in der Antriebswelle eingeschraubt.

Die Patentschrift 3,161,902 zeigt einen Wischerarm, welcher an einer Antriebswelle befestigt ist.

Die Patentschrift 3,429,597 zeigt eine Scheibenwischvorrichtung mit einem Wischerarm, welcher an einer Antriebswelle befestigt ist.

### Aufgabenstellung

Der vorliegenden Erfindung liegt die Aufgabe zugrunde, einen Scheibenwischer, der kompakt aufgebaut ist und eine Feinausrichtung des Scheibenwischers relativ zu der Antriebswelle ermöglicht, und ein entsprechendes Verfahren zu dessen Ausrichtung zu schaffen.

Die der Erfindung zugrunde liegende Aufgabe wird durch einen Scheibenwischer mit den Merkmalen des kennzeichnenden Teils des Patentanspruchs 1 und ein Verfahren zu dessen Ausrichtung mit den Merkmalen des kennzeichenden Teils des Patentanspruchs 2 gelöst.

### Ausführungsbeispiele

Im folgenden wird die Erfindung mit Bezugnahme auf die Zeichnungen näher beschrieben. Es zeigen:
FIG. 1 eine Schnittansicht eines Teilstücks eines Scheibenwischerarms mit einem Befestigungselement und einer Antriebswelle;
FIG. 2 eine Vorderansicht des Teilstücks des Scheibenwischerarms aus FIG. 1; und
FIG. 3 eine weitere Schnittansicht des Teilstücks des Wischerarms aus FIG. 1 senkrecht zur Schnittansicht aus FIG. 1.

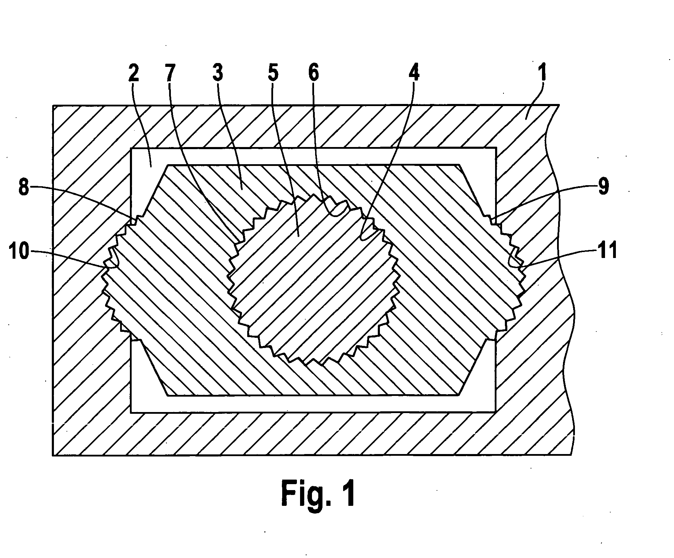

FIG. 1 zeigt eine Schnittansicht eines Teilstücks des Scheibenwischerarms 1 in dessen Aussparung 2 ein Befestigungselement 3 eingesteckt ist, welches in der Mitte einen Nabe 4 aufweist, die auf eine Antriebswelle 5 aufgesteckt ist. Am Rand der Nabe 4 ist eine Rändelung 6 ausgebildet. Diese Rändelung 6 greift in eine entsprechende Rändelung 7 der Antriebswelle 5 ein. Die Rändelung 6 an der Nabe 4 erlaubt die Grobjustierung des Scheibenwischers relativ zu der Antriebswelle 5, indem das Befestigungselement 3 in einer von vielen unterschiedlichen Positionen auf die Antriebswelle 5 aufgesteckt wird. Praktisch ist durch die Rändelung 6 eine Genauigkeit der Winkelposition des Scheibenwischers relativ zur Antriebswelle 5 von ungefähr 3° zu erreichen. Die Rändelung 7 kann dabei fest in die Rändelung 6 des Befestigungselements 3 eingreifen, wenn dieses aus einem weichen Werkstoff besteht. Das Befestigungselement ist dann nicht nur formschlüssig sondern auch kraftschlüssig an der Antriebswelle 5 befestigt.

Das Befestigungselement 3 weist auf zwei gegenüberliegenden Seiten am Außenrand die Rändelungen 8 und 9 auf. Die zwei Rändelungen 8 und 9 greifen in zwei entsprechende Rändelungen 10 und 11 am Rand der Aussparung 2 ein. Die zwei Rändelungen 8 und 9 am Außenrand des Befestigungselements 3 sind längs des Wischerarmes 1 angeordnet. Aufgrund der gestreckten Form des Wischerarmes ermöglicht diese Anordnung die Schaffung eines relativ großen Abstands der Rändelungen 8 und 9 am Außenrand des Befestigungselements 3. Ein großer Abstand zwischen den Rändelungen 8 und 9 ist notwendig, um eine Feinjustierung des Befestigungselements 3 bei vorgegebenen Abstand zwischen den Rillen der Rändelungen 8 und 9 zu erreichen, da ein gewisser Abstand zwischen den Rillen der Rändelungen 8 und 9 nicht unterschritten werden darf, um die mechanische Belastbarkeit des Scheibenwischers nicht zu verringern. Praktisch ist durch die Rändelungen 8 und 9 eine Genauigkeit der Winkelposition von ungefähr 0,5° zu erreichen.

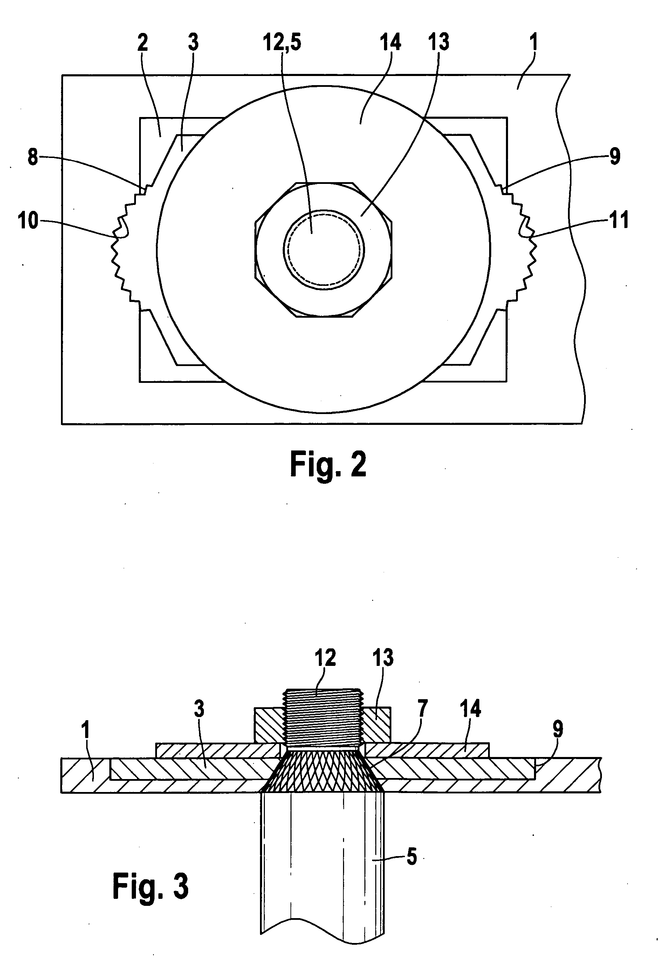

FIG. 2 zeigt eine Vorderansicht des Teilstücks des Scheibenwischerarms 1 aus FIG. 1. Die Antriebswelle 5 geht in eine Schraube 12 über, welche in eine Mutter 13 eingeschraubt ist. Die Mutter 13 drückt die Unterlegscheibe 14 auf den Scheibenwischerarm 1 und das Befestigungselement 3, die wiederum gegen einen kegelstumpfförmig ausgebildeten Bereich der Antriebswelle 5 gedrückt werden, wodurch eine Bewegung des Scheibenwischerarms 1 und des Befestigungselements 3 entlang der Antriebswelle 5 verhindert wird, wie weiter unten mit Bezug auf FIG. 3 gezeigt. Im Gegensatz hierzu verhindern die Rändelungen eine Drehung des Wischerarmes 1 und des Befestigungselements 3 um die Antriebswelle 5. Im Bereich des Befestigungselementes 3 ist die Antriebswelle 5 vorzugsweise zylinderförmig ausgebildet.

FIG. 3 zeigt eine weitere Schnittansicht durch den Wischerarm 1, die senkrecht zur Schnittansicht aus FIG. 1 verläuft. Die Antriebswelle 5 geht in die Schraube 12 über. Am Übergang der Antriebswelle 5 zur Schraube 12 ist ein kegelstumpfförmiger Bereich ausgebildet, auf dessen Außenfläche die Rändelung 7 ausgebildet ist. Die Rändelung 7 greift in die entsprechende Rändelung 6 an der Nabe 4 ein (siehe FIG. 1), die in der Mitte des Befestigungselements 3 ausgebildet ist. Die Unterseite der Aussparung 2 ist verschlossen, so daß auch im Scheibenwischerarm 1 ein Loch mit schräg abfallenden Seiten ausgebildet ist, durch welches die Antriebswelle 5 verläuft. Das Loch im Wischerarm 1 und die Nabe 4 im Befestigungselement 3 sind dabei so an die schräg abfallenden Seiten des kegelstumpfförmigen Bereichs der Antriebswelle 5 angepaßt, daß deren Bewegung in einer Richtung entlang der Antriebswelle begrenzt ist, während ihre Bewegung in der anderen Richtung durch die Unterlegscheibe 14 begrenzt ist, die von der Mutter 13 zurückgehalten wird. Die Rändelungen 6, 8 und 9 des Befestigungselements 3 greifen in die entsprechende Rändelung am Rand der Aussparung in dem Wischerarm 1 und der Antriebswelle 5 ein, um so die Drehung des Wischerarms 1 relativ zu der Antriebswelle 5 zu verhindern.

Beim Anbringen des Scheibenwischers an der Antriebswelle 5 kann entweder zunächst das Befestigungselement 3 in den Wischerarm 1 eingesteckt werden und dann der Scheibenwischer an die Antriebswelle angeschraubt werden, oder zunächst der Wischerarm 1 und dann das Befestigungselement 3 auf die Antriebswelle 5 aufgesteckt werden, bevor der Wischerarm 1 mit dem Befestigungselement 3 mit Hilfe der der Unterlegscheibe 14 und der Schraube 13 an der Antriebswelle 5 befestigt werden.

## Patentansprüche

1. Scheibenwischer mit einem Scheibenwischerarm (1) und einem Befestigungselement (3), wobei das Befestigungselement (3) an dem Scheibenwischerarm (1) befestigt ist, und wobei das Befestigungselement (2) eine Nabe (4) aufweist, die auf eine Antriebswelle (5) aufsteckbar ist, wobei das Befestigungselement (3) formschlüssig in einer von mindestens zwei möglichen Ausrichtungen in eine Aussparung (2) in dem Scheibenwischerarm (1) eingesteckt ist, wobei das Befestigungselement (3) am Außenrand zwei gegenüberliegende Rändelungen (8, 9) aufweist, die in zwei entsprechende Rändelungen (10, 11) am Rand der Aussparung (2) eingreifen, **dadurch gekennzeichnet, daß** der Rand der Nabe (4) eine Rändelung (6) aufweist, die in eine entsprechende Rändelung (7) der Antriebswelle (5) eingreifbar ist, wobei die Antriebswelle (5) in eine Schraube (12) übergeht, welche in eine Mutter (13) eingeschraubt ist, die eine Unterlegscheibe (14) auf den Scheibenwischerarm (1) und das Befestigungselement (3) drückt, die wiederum gegen einen kegelstumpfförmig ausgebildeten Bereich der Antriebswelle (5) gedrückt sind, wodurch eine Bewegung des Scheibenwischerarms (1) und des Befestigungselements (3) entlang der Antriebswelle (5) verhindert wird, wobei die Rändelung (7) auf einer Außenfläche des kegelstumpförmigen Bereichs ausgebildet ist.

2. Verfahren zum Ausrichten eines Scheibenwischers mit einem Scheibenwischerarm (1) und einem Befestigungselement (3), wobei das Befestigungselement (3) an dem Scheibenwischerarm (1) befestigt wird, und wobei das Befestigungselement (3) eine Nabe (4) aufweist, die auf eine Antriebswelle (5) formschlüssig aufsteckt wird, wobei das Befestigungselement (3) formschlüssig in einer von mindestens zwei möglichen Ausrichtungen in eine Aussparung (2) in dem Scheibenwischerarm (1) eingesteckt wird, wobei das Befestigungselement (3) am Außenrand zwei gegenüberliegende Rändelungen (8, 9) aufweist, die in zwei entsprechende Rändelungen (10, 11) am Rand der Aussparung (2) eingreifen, **dadurch gekennzeichnet, daß** der Rand der Nabe (4) eine Rändelung (5) aufweist, die in eine entsprechende Rändelung (7) der Antriebswelle (5) eingreift, wobei die Antriebswelle (5) in eine Schraube (12) übergeht, welche in eine Mutter (13) eingeschraubt ist, die eine Unterlegscheibe (14) auf den Scheibenwischerarm (1) und das Befestigungselement (3) drückt, die wiederum gegen einen kegelstumpfförmig ausgebildeten Bereich der Antriebswelle (5) gedrückt sind, wodurch eine Bewegung des Scheibenwischerarms (1) und des Befestigungselements (3) entlang der Antriebswelle (5) verhindert wird, wobei die Rändelung (7) auf einer Außenfläche des kegelstumpförmigen Bereichs ausgebildet ist.

3. Verfahren nach Anspruch 2, wobei beim Anbringen des Scheibenwischers an der Antriebswelle (5) zunächst das Befestigungselement (3) in den Wischerarm (1) eingesteckt wird und dann der Scheibenwischer an die Antriebswelle (5) geschraubt wird, bevor der Wischerarm (1) mit dem Befestigungselement (3) mit Hilfe der Unterlegscheibe (14) und der Schraube (13) an der Antriebswelle (5) befestigt wird.

4. Verfahren nach Anspruch 2, wobei beim Anbringen des Scheibenwischers an der Antriebswelle (5) zunächst der Wischerarm (1) und das Befestigungselement (3) auf die Antriebswelle (5) aufgesteckt werden, bevor der Wischerarm (1) mit dem Befestigungselement (3) mit Hilfe der Unterlegscheibe (14) und der Schraube (13) an der Antriebswelle (5) befestigt wird.

## Claims

1. Wiper with a wiper arm (1) and a fastening element (3), wherein the fastening element (3) is fastened to the wiper arm (1), and wherein the fastening element (3) has a hub (4) which can be plugged onto a drive shaft (5), wherein the fastening element (3) is plugged in a form-fitting manner, in one of at least two possible alignments, into a recess (2) in the wiper arm (1), wherein the fastening element (3) has two opposite knurlings (8, 9) on the outer edge, the knurlings engaging in two corresponding knurlings (10, 11) on the edge of the recess (2), **characterized in that** the edge of the hub (4) has a knurling (6) which can engage in a corresponding knurling (7) of the drive shaft (5), wherein the drive shaft (5) merges into a screw (12) which is screwed into a nut (13) which presses a washer (14) onto the wiper arm (1) and the fastening element (3) which, in turn, are pressed against a region of frustoconical design of the drive shaft (5), as a result of which a movement of the wiper arm (1) and of the fastening element (3) along the drive shaft (5) is prevented, wherein the knurling (7) is formed on an outer surface of the frustoconical region.

2. Method for aligning a wiper with a wiper arm (1) and a fastening element (3), wherein the fastening element (3) is fastened to the wiper arm (1), and wherein the fastening element (3) has a hub (4) which is plugged onto a drive shaft (5) in a form-fitting manner, wherein the fastening element (3) is plugged in a form-fitting manner, in one of at least two possible alignments, into a recess (2) in the wiper arm (1), wherein the fastening element (3) has two opposite knurlings (8, 9) on the outer edge, the knurlings engaging in two corresponding knurlings (10, 11) on the edge of the recess (2), **characterized in that** the edge of the hub (4) has a knurling (6) which engages in a corresponding knurling (7) of the drive shaft (5), wherein the drive shaft (5) merges into a screw (12) which is screwed into a nut (13) which presses a washer (14) onto the wiper arm (1) and the fastening element (3) which, in turn, are pressed against a region of frustoconical design of the drive shaft (5), as a result of which a movement of the wiper arm (1) and of the fastening element (3) along the drive shaft (5) is prevented, wherein the knurling (7) is formed on an outer surface of the frustoconical region.

3. Method according to Claim 2, wherein, when the wiper is fitted to the drive shaft (5), the fastening element (3) is first of all inserted into the wiper arm (1) and then the wiper is screwed onto the drive shaft (5) before the wiper arm (1) is fastened by the fastening element (3) to the drive shaft (5) with the aid of the washer (14) and the screw (13).

4. Method according to Claim 2, wherein, when the wiper is fitted to the drive shaft (5), the wiper arm (1) and the fastening element (3) are first of all plugged onto the drive shaft (5) before the wiper arm (1) is fastened by the fastening element (3) to the drive shaft (5) with the aid of the washer (14) and the screw (13).

## Revendications

1. Essuie-glace comprenant un bras d'essuie-glace (1) et un élément de fixation (3), l'élément de fixation (3) étant fixé au bras d'essuie-glace (1) et l'élément de fixation (3) présentant un moyeu (4) qui peut être enfiché sur un arbre d'entraînement (5), l'élément de fixation (3) étant enfoncé par engagement par correspondance géométrique dans l'une d'au moins deux orientations possibles dans un évidement (2) dans le bras d'essuie-glace (1), l'élément de fixation (3) présentant au niveau du bord extérieur deux moletages (8, 9) opposés, qui viennent en prise dans deux moletages (10, 11) correspondants sur le bord de l'évidement (2), **caractérisé en ce que** le bord du moyeu (4) présente un moletage (6) qui peut venir en prise dans un moletage (7) correspondant de l'arbre d'entraînement (5), l'arbre d'entraînement (5) se prolongeant par une vis (12) qui est vissée dans un écrou (13) qui presse une rondelle (14) sur le bras d'essuie-glace (1) et l'élément de fixation (3), lesquels sont à leur tour pressés contre une région de l'arbre d'entraînement (5) réalisée sous forme tronconique, de sorte qu'un mouvement du bras d'essuie-glace (1) et de l'élément de fixation (3) le long de l'arbre d'entraînement (5) soit empêché, le moletage (7) étant réalisé sur une surface extérieure de la région tronconique.

2. Procédé pour l'orientation d'un essuie-glace avec un bras d'essuie-glace (1) et un élément de fixation (3), l'élément de fixation (3) étant fixé sur le bras d'essuie-glace (1) et l'élément de fixation (3) présentant un moyeu (4) qui est enfiché par engagement par correspondance géométrique sur un arbre d'entraînement (5), l'élément de fixation (3) étant enfoncé par engagement par correspondance géométrique dans l'une de deux orientations possibles dans un évidement (2) dans le bras d'essuie-glace (1), l'élément de fixation (3) présentant au niveau du bord extérieur deux moletages (8, 9) opposés, qui viennent en prise dans deux moletages (10, 11) correspondants sur le bord de l'évidement (2), **caractérisé en ce que** le bord du moyeu (4) présente un moletage (6) qui vient en prise dans un moletage (7) correspondant de l'arbre d'entraînement (5), l'arbre d'entraînement (5) se prolongeant par une vis (12) qui est vissée dans un écrou (13) qui presse une rondelle (14) sur le bras d'essuie-glace (1) et l'élément de fixation (3), lesquels sont à leur tour pressés contre une région de l'arbre d'entraînement (5) réalisée sous forme tronconique, de sorte qu'un mouvement du bras d'essuie-glace (1) et de l'élément de fixation (3) le long de l'arbre d'entraînement (5) soit empêché, le moletage (7) étant réalisé sur une surface extérieure de la région tronconique.

3. Procédé selon la revendication 2, dans lequel, lors du montage de l'essuie-glace sur l'arbre d'entraînement (5), l'élément d'actionnement (3) est tout d'abord enfoncé dans le bras d'essuie-glace (1) puis l'essuie-glace est vissé sur l'arbre d'entraînement (5), avant que le bras d'essuie-glace (1) avec l'élément de fixation (3) soit fixé à l'arbre d'entraînement (5) à l'aide de la rondelle (14) et de la vis (13).

4. Procédé selon la revendication 2, dans lequel, lors du montage de l'essuie-glace sur l'arbre d'entraînement (5), tout d'abord le bras d'essuie-glace (1) et l'élément de fixation (3) sont enfichés sur l'arbre d'entraînement (5), avant que le bras d'essuie-glace (1) avec l'élément de fixation (3) soit fixé à l'arbre d'entraînement (5) à l'aide de la rondelle (14) et de la vis (13).
